# EUROPEAN PATENT APPLICATION

(11) **EP 2 045 700 A1**
(43) Date of publication of application: **08.04.2009**
(21) Application number: 08016984.0
(22) Date of filing: 26.09.2008
(51) Int. Cl.: G06F 3/048

(54) **Menu display method for a mobile communication terminal**

(30) Priority: 04.10.2007 KR 20070100025; 22.08.2008 KR 20080082511
(71) Applicant: LG Electronics Inc., Seoul 150-010 (KR)
(72) Inventor: Jeong, Kye-Sook, Seoul (KR); Roh, Byung-Nam, Gyeonggi-Do (KR); Lim, Min-Taik, Seoul (KR); Kim, Kyung-Lack, Gyeonggi-Do (KR); Kim, Tae Hun, Incheon (KR)
(74) Representative: Katérle, Axel

(57) **Abstract**

A mobile terminal comprising a display module to display a tag and to display a menu screen image related to the tag at one portion of a background image as the tag is dragged, the menu screen image being displayed according to a dragging direction and a dragging distance; an input unit to detect a touch input with respect to the display module or the tag to determine the dragging direction and the dragging distance; and a controller to expose or hide the menu screen image according to the dragging direction the dragging distance of the inputted touch.

## Description

### TECHNICAL FIELD

The present disclosure relates to a method for dragging a menu screen image in a tactile manner to allow the menu screen image to be exposed or hidden by a background screen image, and a mobile terminal implementing the same.

### BACKGROUND

A mobile terminal is a device which may be configured to perform various functions. Examples of such functions include data and voice communications, capturing images and video via a camera, recording audio, playing music files via a speaker system, and displaying images and video on a display. Some terminals include additional functionality which supports game playing, while other terminals are configured as multimedia players. More recently, mobile terminals have been configured to receive broadcast and multicast signals which permit viewing of content such as videos and television programs.

Efforts are ongoing to support and increase the functionality of mobile terminals. Such efforts include software and hardware improvements. For example, a user interface environment is provided to allow users to easily and conveniently search or select functions. Also, as users consider their mobile terminal to be a personal portable device that may express their personality, various designs for the mobile terminals are required, and in terms of design, a folder type, slide type, bar type, or rotation type design may be applied for mobile terminals.

Most users prefer a wider and bigger display screen on the mobile terminal so that they can more comfortably interact with the menus and buttons displayed thereon, particularly in mobile terminals that enable use of a touch screen. Unfortunately, even the larger screen sizes appear to be small and cluttered due to the multitudes of interactive objects such as icons and menus that are typically configured for display on the mobile terminal. A method and system that can provide a user with a more convenient means of accessing said interactive objects is needed.

### SUMMARY

To achieve these and other objectives and in accordance with the purpose of the present disclosure, as embodied and broadly described herein, the present disclosure provides in one aspect a mobile terminal comprising: a display module to display a tag (i.e., an interactive object) and to display a menu screen image related to the tag at one portion of a background screen image as the tag is dragged, the menu screen image being displayed according to a dragging direction and a dragging distance; an input unit to detect a touch input with respect to the display module or the tag to determine the dragging direction and the dragging distance; and a controller to expose or hide the menu screen image according to the dragging direction the dragging distance of the inputted touch.

To achieve these and other advantages and in accordance with the purpose of the present disclosure, as embodied and broadly described herein, the present disclosure provides in another aspect a method for displaying a menu of a mobile terminal, comprising: a means of displaying a tag and a menu screen image related to the tag at one portion of a background screen image as the tag is dragged, the menu screen image being displayed according to a dragging direction and a dragging distance; a means of detecting a touch input with respect to a display module or the tag to determine the dragging direction and the dragging distance; and a means of exposing or hiding the menu screen image according to the dragging direction and the dragging distance of the inputted touch.

Further scope of applicability of the present disclosure will become apparent from the detailed description given hereinafter. However, it should be understood that the detailed description and specific examples, while indicating preferred embodiments of the disclosed mobile terminal and method, are given by illustration , since various changes and modifications within the spirit and scope of the disclosed mobile terminal and method will become apparent to those skilled in the art from this detailed description.

### BRIEF DESCRIPTION OF THE DRAWINGS

The present disclosure will become more fully understood from the detailed description given below and the accompanying drawings, which are given by illustration , and thus are not limitative of the present disclosure.
FIG 1 is a schematic block diagram of a mobile terminal according to one embodiment;
FIG 2 is a front perspective view of the mobile terminal according to one embodiment;
FIG 3 is a rear view of the mobile terminal in FIG 2;
FIG 4 shows a background screen image of the mobile terminal according to one embodiment;
FIG 5 is a flow chart illustrating the process of displaying a menu of the mobile terminal according to one embodiment;
FIG 6A is a view showing a method for calling a tag related to a menu in FIG. 5;
FIG 6B is a view showing various positions of tags called in FIG. 6A;
FIG 7A shows a first example of displaying a menu screen by dragging a tag in FIG. 6B;
FIG. 7B shows a second example of displaying a menu screen by dragging a tag in FIG 6B;
FIG 7C shows a third example of displaying a menu screen by dragging a tag in FIG. 6B;
FIG 8 is a view showing a method for displaying a menu screen according to a touch format of a tag in FIG 6B; and
FIGS. 9A to 9E are exemplary views for explaining a method for displaying a menu screen image in a state that an executed screen image is displayed according to one embodiment.

Reference will now be made in detail to the preferred embodiments of the present disclosure, examples of which are illustrated in the accompanying drawings. If a detailed explanation for a related known function or construction is considered to unnecessarily divert the gist of the present disclosure, such explanation has been omitted but would be understood by those skilled in the art. In describing the present disclosure with reference to the accompanying drawings, like reference numerals are used for the elements performing like function.

### DETAILED DESCRIPTION OF EXAMPLE EMBODIMENTS

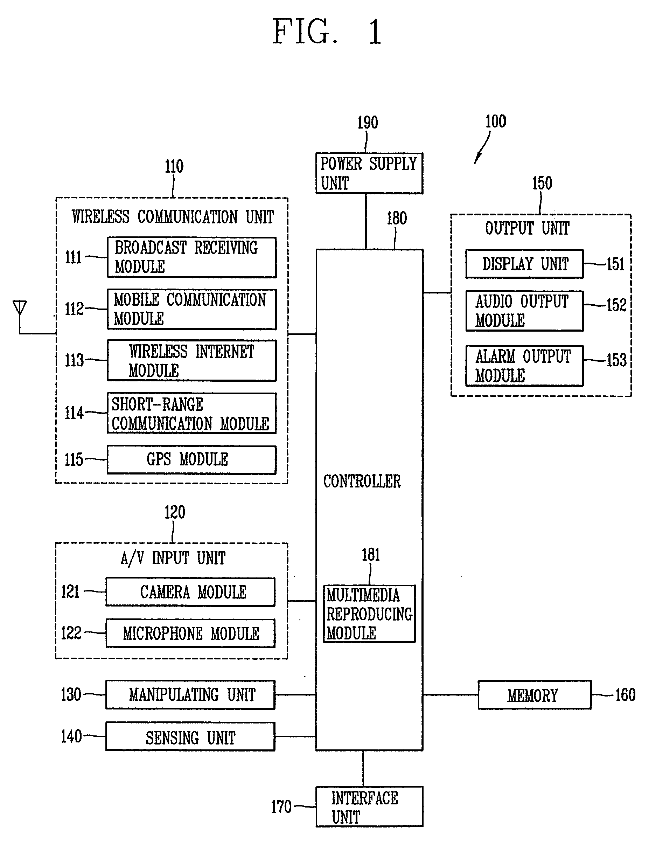

Referring to FIG. 1, a mobile terminal 100 according to one embodiment, may be implemented in various configurations or form factors. Examples of such terminals include mobile phones, smart phones, notebook computers, navigation devices, digital broadcast terminals, personal digital assistants (PDAs), or a portable multimedia players (PMP). The mobile terminal 100 may include a wireless communication unit 110, an A/V (Audio/Video) input unit 120, a manipulating unit 130, a sensing unit 140, an output unit 150, a storage unit 160, an interface unit 170, a controller 180, and a power supply unit 190, etc. Greater or fewer components may alternatively be implemented.

For example, the wireless communication unit 110 may include a broadcast receiving module 111, a mobile communication module 112, a wireless Internet module 113, a short-range communication module 114, and a GPS module 115. The broadcast receiving module 111 receives a broadcast signal and/or broadcast associated information from an external broadcast management server via a broadcast channel. The broadcast channel may include a satellite channel and a terrestrial channel. The broadcast managing server may refer to a system that generates and transmits a broadcast signal and/or broadcast associated information or a server that receives a previously generated broadcast signal and/or broadcast associated information and transmits the same to a terminal.

Examples of the broadcast associated information may include information regarding a broadcast channel, a broadcast program, a broadcast service provider, etc. The broadcast signal may include a TV broadcast signal, a radio broadcast signal, and a data broadcast signal, among others. If desired, the broadcast signal may further include a broadcast signal combined with a TV or radio broadcast signal. The broadcast associated information may be provided also via a mobile communication network and, in this case, the broadcast associated information may be received by the mobile communication module 112. The broadcast signal may exist in various forms. For example, it may exist in the form of an electronic program guide (EPG) of digital multimedia broadcasting (DMB), electronic service guide (ESG) of digital video broadcast-handheld (DVB-H), etc.

The broadcast receiving module 111 may be configured to receive broadcast signals by using various types of broadcast systems. In particular, the broadcast receiving module 111 may receive a digital broadcast signal by using a digital broadcast system such as multimedia broadcasting-terrestrial (DMB-T), digital multimedia broadcasting-satellite (DMB-S), digital video broadcast-handheld (DVB-H), the data broadcasting system known as media forward link (MediaFLO®), integrated services digital broadcast-terrestrial (ISDB-T), etc. The broadcast receiving module 111 is configured to be suitable for every broadcast system that provides a broadcast signal as well as the above-mentioned digital broadcast systems. Broadcast signal and/or broadcast-associated information received via the broadcast receiving module 111 may be stored in the storage unit 160.

The mobile communication module 112 transmits/receives radio signals to/from at least one of a base station, an external terminal and a server in a mobile communication network. Such radio signals may include a voice call signal, a video call signal or various types of data according to text/multimedia message transmission/reception. The wireless Internet module 113 supports Internet access for the mobile terminal 100, and may be internally or externally coupled to the mobile terminal 100. The short-range communication module 114 refers to a module for supporting short range communications. Some examples of short-range communication technology include Bluetooth^{™}, Radio Frequency IDentification (RFID), Infrared Data Association (IrDA), Ultra-WideBand (UWB), ZigBee^{™}, and the functional or structural equivalents.

The GPS module 115 is a module receives location information from a plurality of artificial satellites. AN input unit 120 is configured to input an audio or video signal. The AN input unit 120 may include a camera module 121 and a microphone module 122. The camera module 121 processes image frames of still pictures or videos obtained by an image sensor in a video capturing mode or an image capturing mode. The processed image frames may be displayed on a display module 151. The image frames processed by the camera module 121 may be stored in the memory 160 or transmitted via the wireless communication unit 110. Two or more camera modules 121 may be provided according to the configuration of the mobile terminal 100.

The microphone module 122 may receive sounds (e.g., audible data) via a microphone in a phone call mode, a recording mode, a voice recognition mode, and the like, and process it into electrical voice data. The processed audio (voice) data may be converted for output into a format transmittable to a mobile communication base station via the mobile communication module 112 in case of the phone call mode. The microphone module 122 may include various types of noise canceling (or suppression) algorithms to cancel (or suppress) noise generated in the course of receiving and transmitting audio signals.

The manipulating unit 130 may generate key input data inputted by a user to control various operations of the mobile terminal 100. The manipulating unit 130 may include a keypad, a dome switch, a touch pad (e.g., a touch sensitive member that detects changes in resistance, pressure, capacitance, etc.), a jog wheel, a jog switch, and the like. In particular, when the touch pad is overlaid on the display module 151 in a layered manner, it may be called a touch screen.

The sensing unit 140 detects a current status (or state) of the mobile terminal 100 such as an open/close state of the mobile terminal 100, a location of the mobile terminal 100, a presence or absence of user contact with the mobile terminal 100, and generates commands or signals for controlling the operation of the mobile terminal 100. For example, when the mobile terminal 100 is a slide type mobile phone, the sensing unit 140 may sense whether the slide phone is opened or closed. In addition, the sensing unit 140 can detect whether or not the power supply unit 190 supplies power or whether or not the interface unit 170 is coupled with an external device.

The interface unit 170 serves as an interface with at least one external device connected with the mobile terminal 100. For example, the external devices may include wired/wireless headset ports, external power charger ports, wired/wireless data ports, memory card ports, ports for connecting a device having an identification module (e.g., SIM/UIM/UICC card), audio input/output (I/O) ports, video I/O ports, earphone ports, or the like. The interface unit 170 may be used to receive inputs (e.g., data, information, power, etc.) from an external device and transfer the received inputs to one or more elements within the mobile terminal 100 or may be used to transfer data from the mobile terminal 100 to an external device.

The output unit 150 is configured to output an audio signal, a video signal or an alarm signal. The output unit 150 may include the display module 151, an audio output module 152, an alarm output module 153, and the like. The display module 151 may output information processed in the mobile terminal 100. For example, when the mobile terminal 100 is in the phone call mode, the display unit 151 may display a User Interface (UI) or a Graphic User Interface (GUI) associated with a call or other communication. When the mobile terminal 100 is in the video call mode or the image capturing mode, the display unit 151 may display a captured and/or received image, a UI, a GUI, and the like.

When the display module 151 and the touch pad are overlaid in a layered manner to form a touch screen, the display module 151 may function as both an input device and an output device. The display module 151 may include at least one of a Liquid Crystal Display (LCD), a Thin Film Transistor-LCD (TFT-LCD), an Organic Light Emitting Diode (OLED), a flexible display, a three-dimensional (3D) display, for example. The mobile terminal 100 may include two or more display modules (or other display means) according to its embodiment. For example, the mobile terminal 100 may include an external display unit (not shown) and an internal display unit (not shown).

The audio output module 152 may output audio data received from the wireless communication unit 110 or stored in the memory 160 in a call signal reception mode, a call mode, a record mode, a voice recognition mode, a broadcast reception mode, and the like. Also, the audio output module 152 may provide audible outputs related to a particular function (e.g., a call signal reception sound, a message reception sound, etc.) performed by the mobile terminal 100. The audio output module 152 may include a speaker, a buzzer, or the like. The alarm output module 153 may provide outputs to inform about an occurrence of an event of the mobile terminal 100. Typical events may include a call signal reception, a message reception, a key signal input, etc. In addition to audio or video outputs, the alarm output module 153 may provide outputs in a different manner to inform about an occurrence of an event.

For example, the alarm output module 153 may provide outputs in the form of vibrations (or other tactile means). When a call signal, a message, or some other incoming communication is received, the alarm output module 153 may provide tactile outputs (i.e., vibrations) to inform the user. By providing tactile outputs, the user can recognize the occurrence of various events. Outputs informing about the occurrence of an event may be also provided via the display unit 151 or the audio output module 152. The storage unit 160 may store software programs or the like used for the processing and controlling performed by the controller 180, or may temporarily store inputted/outputted data (e.g., a phonebook, messages, still images, video, etc.).

The storage unit 160 may include at least one type of storage medium including a flash memory type, a hard disk type, a multimedia card type, a card-type memory (e.g., SD or DX memory, etc), a Random Access Memory (RAM), a Static Random Access Memory (SRAM), a Read- Memory (ROM), and the like. Also, the mobile terminal 100 may cooperate with a network storage device that performs the storage function of the memory 160 over a network connection. The controller 180 typically controls the general operations of the mobile terminal 100. For example, the controller 180 performs controlling and processing associated with voice calls, data communications, video calls, and the like. In addition, the controller 180 may include a multimedia reproducing module 181 for reproducing (or playing back) multimedia data. The multimedia reproducing module 181 may be configured within the controller 180 or may be configured to be separated from the controller 180.

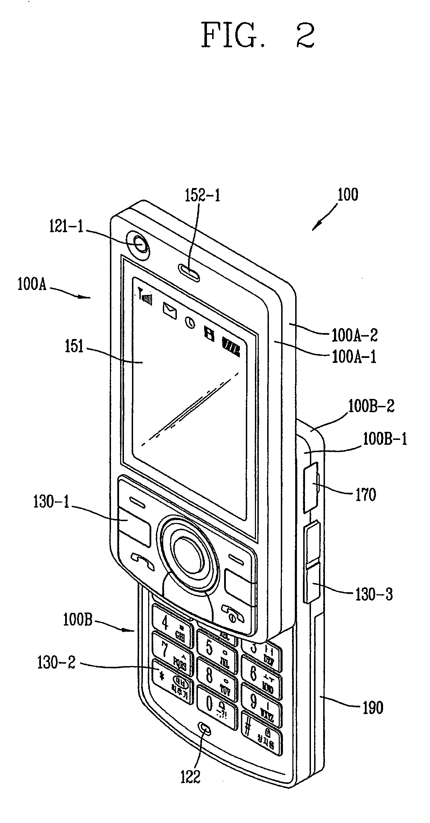

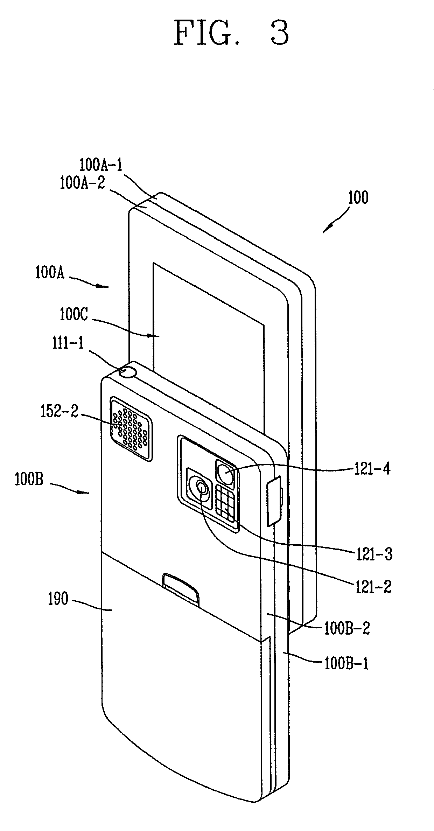

The power supply unit 190 receives external or internal power and supplies power required for the operations of the respective elements under the control of the controller 180. So far, the mobile terminal 100 has been described from the perspective of the functions. Hereinafter, external elements of the mobile terminal 100 will be described from the perspective of their functions with reference to FIGS. 2 and 3. Mobile terminal 100 may be implemented in a variety of different configurations. Examples of such configurations include folder-type, bar-type, swing-type and a slide type combinations thereof. For clarity, further disclosure will primarily relate to the slide-type mobile terminal 100. However such teachings apply equally to other types of terminals.

FIG 2 is a front perspective view of the mobile terminal 100 according to one embodiment. The slide type mobile terminal 100 may comprise a first body 100A, and a second body 100B configured to be slidably moved in at least one direction with respect to the first body 100A. A state in which the first body 100A is disposed to overlap with the second body 100B may be called a closed configuration, and as shown in FIG 2, a state in which the first body 100A exposes at least a portion of the second body 100B may be called an open configuration. The mobile terminal 100 may usually operate in a standby mode in the closed configuration, but this mode can be released by the user. Also, the mobile terminal 100 may mainly function in a call mode in the open configuration, but may be changed to the standby mode according to user manipulation or after the lapse of a certain time.

At least one case (housing, casing, cover, etc.) constituting the external appearance of the first body 100A comprises a first front case 100A-1 and a first rear case 100A-2. Various electronic components may be installed inside the first front case 100A-1 and the first rear case 100A-2. One or more intermediate cases may be additionally disposed between the first front case 100A-1 and the first rear case 100A-2. The case can be formed by injection-molding a synthetic resin, or made of a metallic material such as stainless steel (STS) or titanium (Ti), or some other appropriate material. The display module 151, a first audio output module 152-1, a first camera module 121-1 or a first manipulating unit 130-1 may be located on the first front case 100A-1 of the first body 100A. The display module 151 may include LCD, OLED, and the like, that visually displays information.

A touch pad may be overlaid in a layered manner on the display module 151 to allow the display module 151 to function as a touch screen to input information.

The first audio output module 152-1 may be implemented as a receiver or a speaker. The first camera module 121-1 may be implemented to be suitable for a user to capture still images or video of a user and so on. The first manipulating unit 130-1 receives a command for recording or capturing an image of call communication. Like the first body 100A, a case constituting the external appearance of the second body 100B may be formed by a second front case 100B-1 and a second rear case 100B-2. A second manipulating unit 130-2 may be disposed at the second body 100B, specifically, on a front face of the second front case 100B-1.

A third manipulating unit 130-3, the microphone module 122 and the interface unit 170 may be disposed at either the second front case 100B-1 or the second rear case 100B-2. The first to third manipulating units 130-1, 130-2 and 130-3 may be called a manipulating portion 130, and various methods can be employed for the manipulating portion 130 so long as it can be operated by the user in a tactile manner. The manipulating portion 130 can be implemented as a dome switch or touch pad that can receive user commands or information according to pushing or touching, or implemented in the form of a wheel, a jog element, a joystick, or the like to allow user manipulation thereof.

In terms of its functions, the first manipulating unit 130-1 is used for inputting commands such as start, end, scroll or the like, and the second manipulating unit 130-2 is used for inputting numbers, characters, symbols, or the like. The third manipulating unit 130-3 can be operated to support a so-called hot key function (e.g., speed dialing, dedicated key inputs, etc.) for activating a special function of the mobile terminal 100. The microphone module 122 may be implemented to be suitable for receiving the user's voice and other various sounds. The interface unit 170 may be used as a link (passage or path) through which the mobile terminal 100 can exchange data or the like with an external device.

For example, the interface unit 170 may be implemented as one of a connection port for connecting an earphone to the mobile terminal 100 via a fixed or wireless means, a port for short-range communications (e.g., an Infrared Data Association (IrDA) port, a Bluetooth^{™} port, a wireless LAN port, etc.), power supply ports for providing power to each element. The interface unit 170 has been described, so its detailed description will be omitted. The power supply unit 190 for supplying power to the mobile terminal 100 is located at the side portion of the second rear case 100B-2. The power supply unit 190 may be, for example, a rechargeable battery that can be detached.

FIG 3 is a rear view of the mobile terminal 100 according to an exemplary embodiment. With reference to FIG 3, a second camera module 121-2 may additionally be disposed on a rear surface of the second rear case 100B-2 of the second body 100B. The second camera module 121-2 may have an image capture direction which is substantially the opposite to that of the first camera module 121-1 (see FIG. 1), and may support a different number of pixels as that of the first camera module 121-1.

For example, the first camera module 121-1 may be used for low resolution (i.e., supporting a relatively small number of pixels) to quickly capture an image (or video) of the user's face and immediately transmit the same to the other party during video conferencing or the like. Meanwhile, the second camera module 121-2 may be used for high resolution (i.e., supporting a relatively large number of pixels) in order to capture more detailed (higher quality) images (or video) which typically do not need to be transmitted immediately.

A flash 121-3 and a mirror 121-4 may be additionally disposed adjacent to the second camera module 121-2. When an image of the subject is captured with the second camera module 121-2, the flash 121-3 illuminates the subject. The mirror 121-4 allows the user to see himself when he wants to capture his own image (self-image capturing) by using the second camera module 121-2. The second rear case 100B-2 may further include a second audio output module 152-2. The second audio output module 152-2 may implement a stereophonic sound function in conjunction with the first audio output module 152-1 (See FIG. 2), and may be also used for sending and receiving calls in a speaker phone mode.

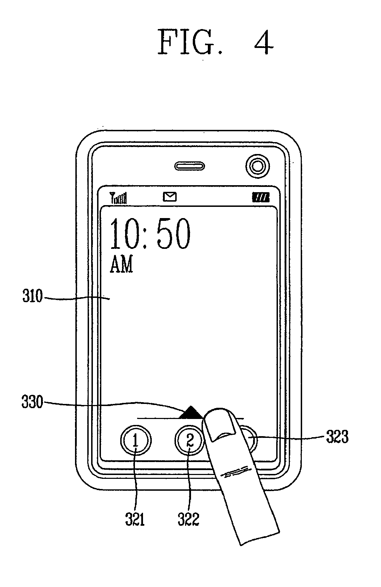

A broadcast signal receiving antenna 111-1 may be disposed at one side or region of the second rear case 100B-2, in addition to an antenna that supports mobile communications. The antenna 111-1 can be configured to be retractable from the second body 100B-2. One part of a slide module 100C that slidably combines the first body 100A and the second body 100B may be disposed on the first rear case 100A-2 of the first body 100A. The other part of the slide module 100C may be disposed on the second front case 100B-1 of the second body 100B, which may not be exposed as shown in FIG 4. In the above description, the second camera module 121-2 and so on is disposed on the second body 100B, but such configuration is not meant to be limited.

For example, one or more of the elements (e.g., 111-1, 121-2, 121-3, 152-2, etc.), which are disposed on the second rear case 100B-2 in the above description, may be mounted on the first body 100A, mainly, on the first rear case 100A-2. In this case, those elements disposed on the first rear case 100A-2 can be protected (or covered) by the second body 100B in the closed configuration. In addition, even if the second camera module 121-2 is not provided, the first camera module 121-1 may be configured to rotate (or otherwise be moved) to thus allow image capturing in various directions.

FIG. 4 shows a background screen image of the mobile terminal 100 according to one embodiment. As shown, the mobile terminal 100 may not display any menu item on a background image 310 in a standby mode or may simply display some menu items 321∼323. A tag 330 related to a menu display may be displayed to allow the user to touch the tag 330 to drag it in a certain direction to expose the other remaining menu items that are usually hidden. A tag may be graphical user interface (GUI) object associated with a functional interface which allows a user to expose or hide from view other GUI objects on the mobile terminal 100's display.

In some embodiments, the tag 330 may not be displayed, and the user may touch one portion of the menu screen image 320 instead of the tag 330 so as to drag the menu screen image 320. Namely, one portion of the menu screen image 320 may be dragged to expose or hide the menu screen image. The method for allowing the menu screen image 320 to appear by dragging a tag 330 will now be described. The menu screen image 320 refers to a screen with menu items that appear from or are hidden in the background image 310.

The tag 330 may be displayed in a shape (e.g., an arrow) indicating a direction in which the menu screen image 320 is exposed or a direction in which the tag 330 can be dragged. For example, the tag 330 may have a triangular shape or an arrow shape. Accordingly, the tag 330 may be displayed by changing its direction according to whether the menu screen image 320 is exposed or hidden from view. The menu item displayed on the background screen image 310 may include an icon for executing a program. In addition, the menu item may include a 'group menu item' 430 for retrieving a menu item of a different group and displaying it on the background screen.

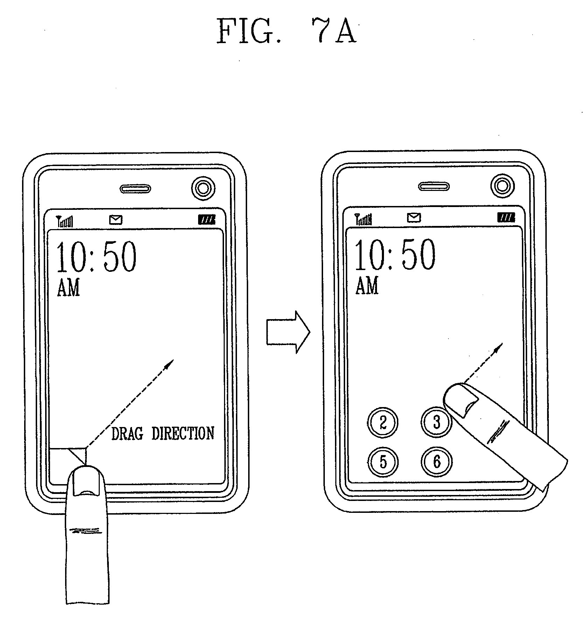

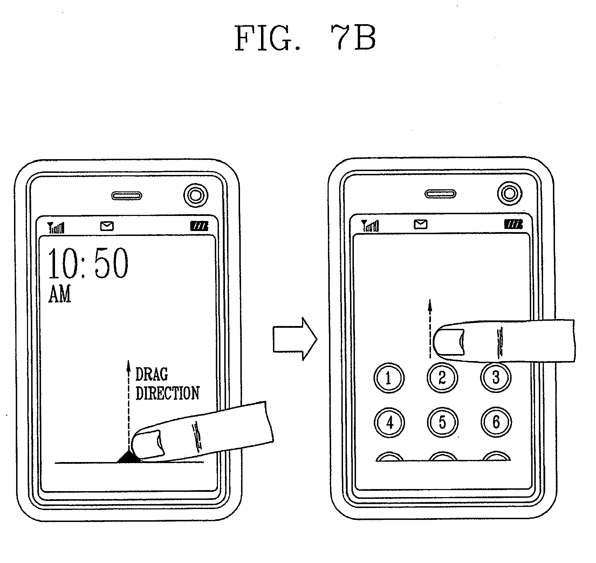

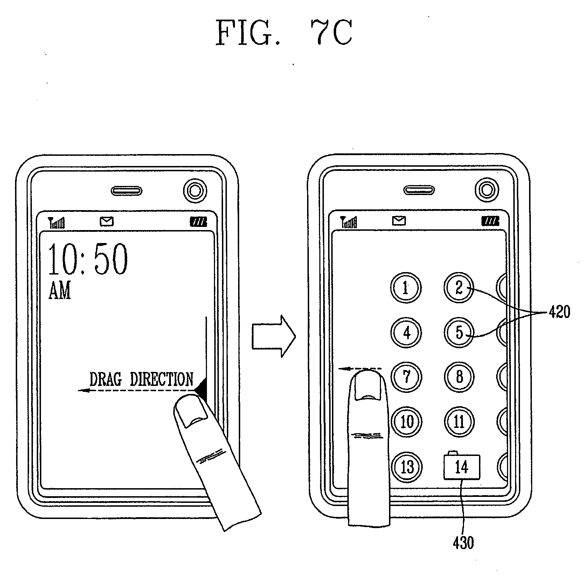

As shown in FIG 7C, a 'group menu item' 430 may be displayed in the shape that can be discriminated from the menu item for executing the program. However, it may not be limited to the shape as shown in FIG 7C. Menu screen image 320, which refers to a screen image including a plurality of menu items (or icons), is visually distinguished from the background screen image(s) 310 and may be translucent (i.e., semi-transparent) to allow the background screen image(s) 310 to be seen there through. In this case, an environment setting menu may be provided to allow the degree of transparency of the menu screen to be adjusted.

The menu screen image 320 may expose some of the menu items while hiding other items according to the distance along which the tag 330 is dragged. Namely, some of the menu items may be displayed while others may not be displayed according to the drag distance. Also, the controller 180 may determine the type of touch that was or is being performed when the user touches or releases the tag (icon) 330 based upon at least one of the number of touches, a contact time, contact speed, contact direction, contact pressure and contact surface area, or any combination thereof.

The type of touch may include pushing or pulling (or otherwise moving) the tag 330 or icon on the screen in an upward, downward or some other direction in a rather abrupt movement, which may be referred to as "flicking" because the movement, in one embodiment, may be compared to the motion associated with flicking a page of a book, for example. When the tag 330 is flicked in such a manner, the entire menu screen image 320 can be automatically shown (or exposed) or hidden such that the image appears to be unfolding on the screen without having to drag the entire menu screen image 320 all the way across the screen.

The respective menu items displayed on the menu screen image 320 may be indicated by icons of certain shapes or images. The menu items may be arranged in an arbitrary format by combining rows and columns or may be arranged randomly by disregarding rows and columns. The menu screen image 320 may be shown at or be hidden from a particular region of the screen, by setting at least one of a side portion, a corner portion, or a central portion of the touch screen as a boundary region from which the menu screen image 320 can appear or disappear, and the tag 330 (or other graphical indicator) can be used to indicate the boundary region.

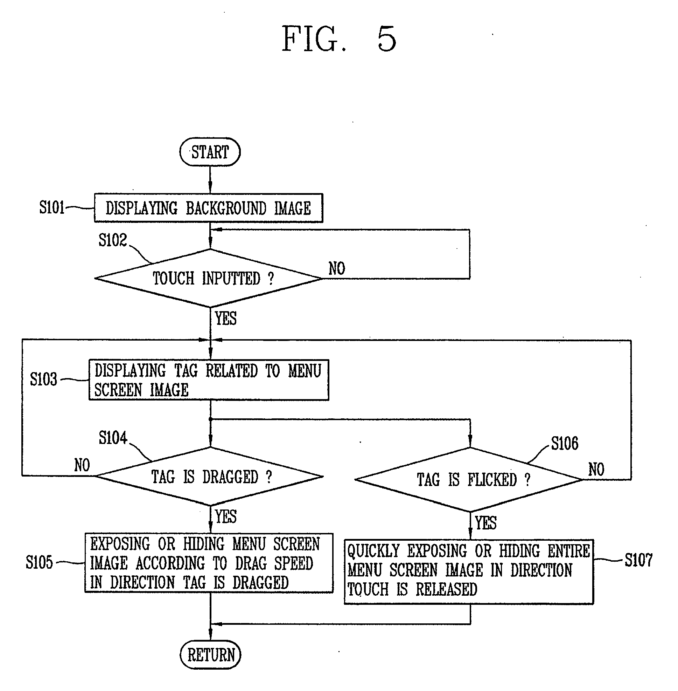

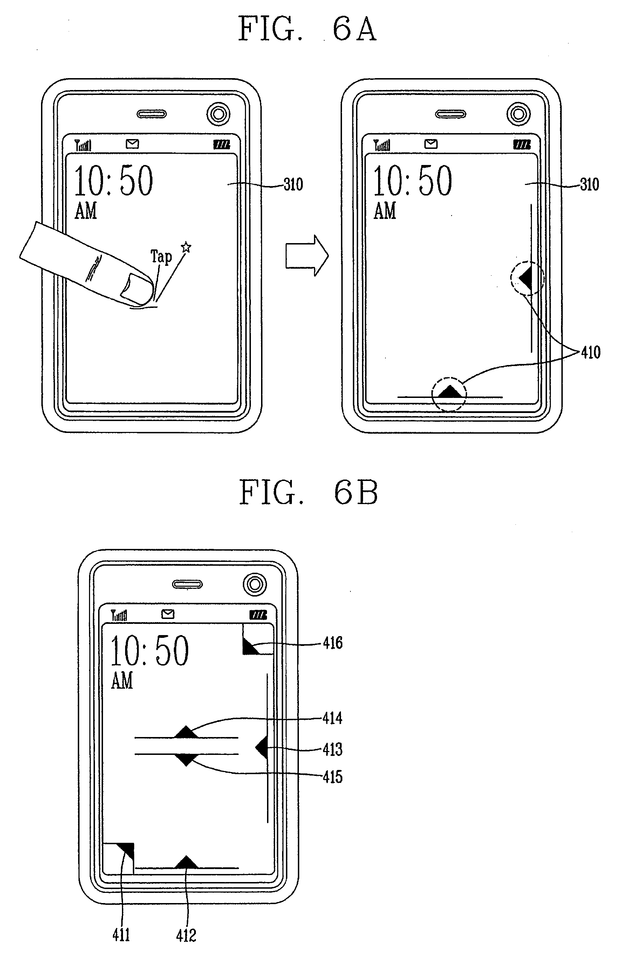

FIG 5 is a flow chart illustrating the process of displaying a menu of the mobile terminal 100 according to one embodiment. The method of display process of the mobile terminal 100 according to the present disclosure will now be described with reference to FIGS. 5, 6A, 6B, 7A, 7B, 7C and 8. For the sake of example, it is assumed that no menu item is displayed on the background screen image 310 of the mobile terminal 100. As shown in FIG 6A, if there is nothing displayed on the background screen image 310 with respect to a menu item, the user may touch the background screen image 310 to display tags 410 to display a menu screen image 320. That is, when a touch is inputted with nothing displayed on the background screen image 310, the tags 410 related to the menu screen image 320 are displayed (S101 to S103).

As shown in FIG. 6B, one or more tags 411 to 416 may be displayed, and the tags 410 may be displayed at one of a side, a corner or an internal region of the touch screen. If a tag related to the menu display is already displayed on the background screen image 310, the tag calling process may be omitted. After the tag is displayed, if there is no dragging or flicking during a pre-set time, the displayed tag may be released. With the tags 410 displayed, when the user touches one of the tags 410 and drags it (S104), the controller 180 exposes a menu screen image 320, which has been hidden, in the direction in which the tag is dragged as shown in FIGs. 7A to 7C. Likewise, if the tag is dragged in a different direction, an exposed menu screen image 320 may be hidden (S105).

The menu items displayed on the menu screen image 320 may include a group menu item 430 indicating a menu item included in a different menu group, and it may be displayed to be different from the menu items 420 for executing a program. If tag dragging is stopped before the entire menu screen image 320 is exposed, or when the touch to the tag being dragged is released, the menu screen maintains a currently exposed state as it is. That is, while flicking results in exposing or hiding the entire menu screen image 320, dragging allows adjusting of the degree of exposing or hiding of the menu screen image 320 in accordance with the speed and direction of the dragging motion.

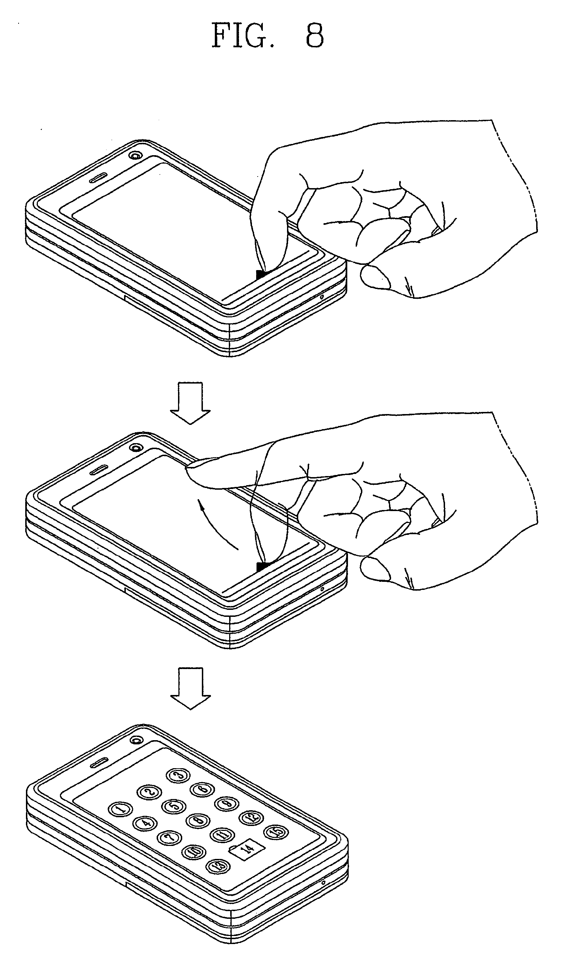

Notably, referring back for FIG 5, if the user wants to quickly expose or hide the entire menu screen image 320, he may flick a desired tag by for example interactive with the tag successively (e.g., tapping on the tag), or as shown in FIG 8, the user may push the tag up or down in a bouncing manner (S106, S107). In order to determine a touch input type (i.e., whether the user means to flick or drag the tag), the controller 180 may use one or more factors associated with user interaction with the tag. These factors may include time, speed, direction, pressure and area to which the touch is applied or released.

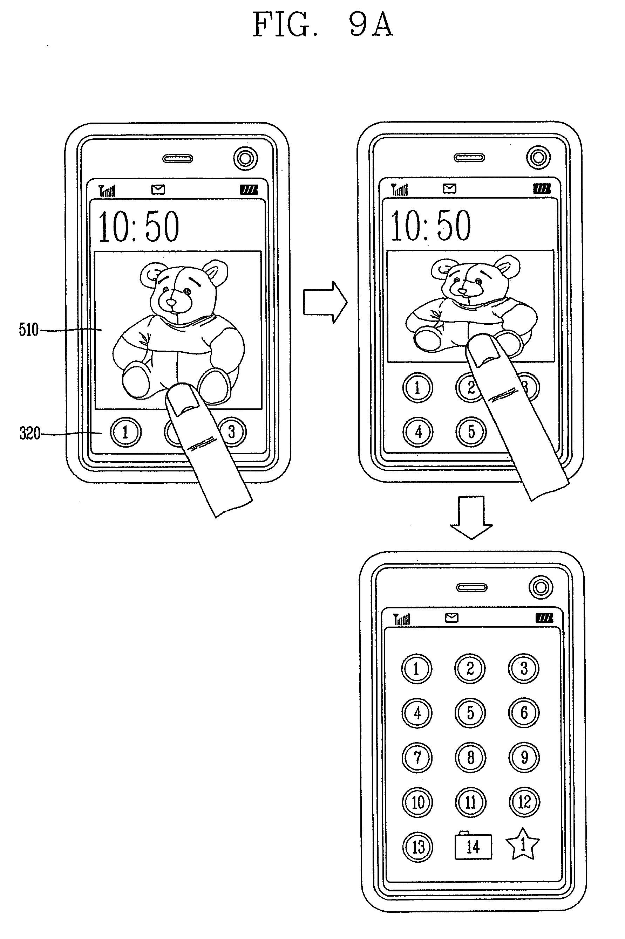

The method for displaying a menu screen image 320 when a screen image executing a particular menu is displayed on a background screen will now be described with reference to FIGs. 9A to 9E. As shown in FIG 9A, if it is assumed that a particular menu has been already executed and the corresponding execution screen image 510 is displayed on the background screen image 310, if the region of the exposed menu screen increases, the size of the region where the executed screen image 510 is displayed would be reduced inverse-proportionally. For example, if the menu screen image 320 is dragged to appear in a state that a video reproduction image has been displayed, the region of the exposed menu screen image 320 is gradually increased while the size of region where the video reproduction image is displayed is gradually reduced.

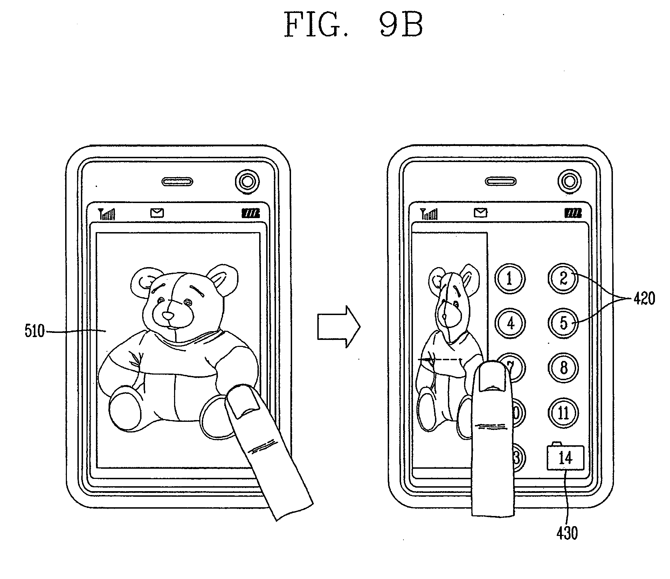

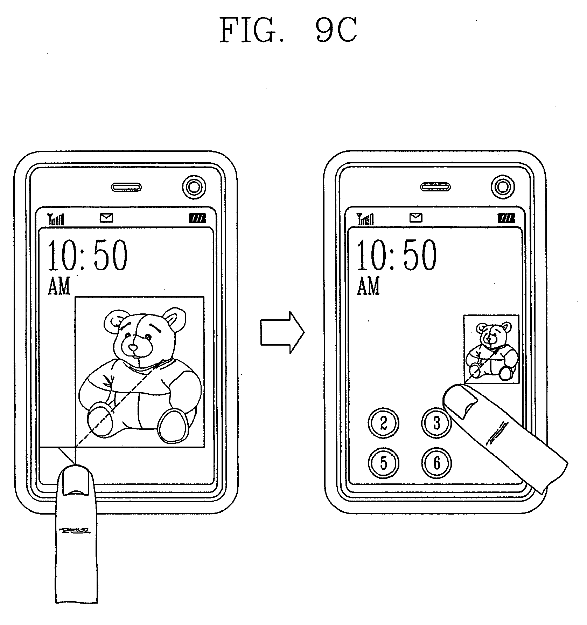

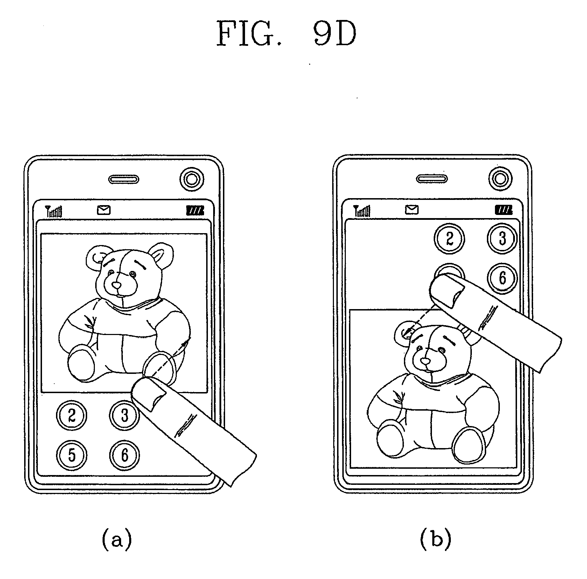

A display position of the re-sized executed screen image 510 may vary according to a direction in which the menu screen image 320 is dragged. For example, as shown in FIG 9A, when the menu screen image 320 is dragged in a downward direction, the re-sized executed screen image 510 may be displayed at an upper portion. As shown in FIG 9B, if the menu screen image 320 is dragged from the right side, it may be displayed at the left portion. In addition, as shown in FIG 9C, if the menu screen image 320 is dragged from one corner portion, the executed screen image 510 may be displayed at a corner potion of its opposite side. As shown in FIG 9D, even if the menu screen image 320 is dragged from one corner portion, the executed screen image 510 may be displayed at up/down portion (a) or left/right portion (b).

With reference to FIGs. 9A and 9C, the re-sizing method of the executed screen image 510 may vary according to the direction in which the menu screen image 320 is dragged. For example, if the menu screen image 320 is dragged in an upward direction or in a downward direction, the length of the vertical direction (up/down direction) of the executed screen image 510 is adjusted while the length of the horizontal direction of the executed screen image 510 is maintained. If the menu screen image 320 is dragged in a left direction or in a right direction, the length of the horizontal direction (left/right direction) of the executed screen image 510 is adjusted while the length of the vertical direction of the executed screen image 510 is maintained. If the menu screen image 320 is dragged from a corner portion, the both lengths of the horizontal and vertical directions of the executed screen image 510 can be adjusted.

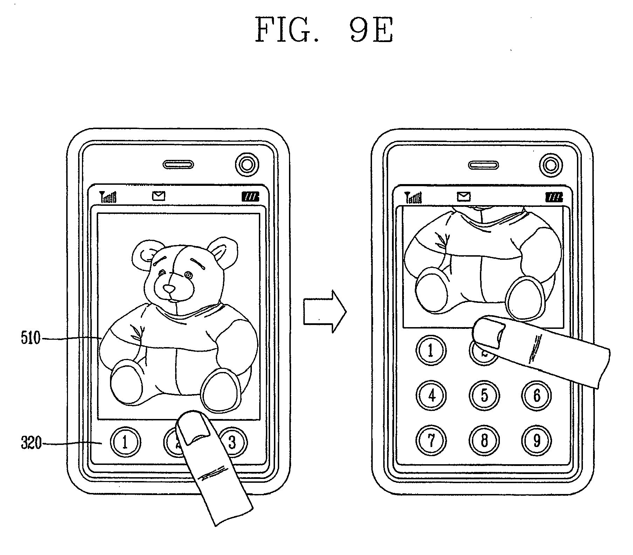

Instead of adjusting the size of the executed screen image 510 according to an environment setting option, a portion of the region where the executed screen image 510 like the menu screen image 320 is displayed may be allowed to appear or be hidden as shown in FIG 9E. Namely, as the exposure region of the menu screen image 320 increases, the exposure region of the executed screen image 510 may be reduced inverse-proportionally. Also, as the exposure region of the menu screen image 320 is reduced, the exposure region of the executed screen image 510 may be increased inverse-proportionally.

The controller 180 controls the operation of resizing or exposing/hiding the executed screen image 510 according to an exposing/hiding operation of the menu screen image 320. In the above description, tags 410 are displayed on the menu screen image 320 and a desired tag being displayed is touched to be dragged or flicked to display a menu screen image 320. However, even without tags 410 for controlling display of the menu screen image 320, the above-described menu screen display function may be executed when the background screen image 310 is touched for a particular time period and then dragged or flicked. In this case, a touch unit for touching, dragging and flicking may be the user's finger or a stylus, or any other means that have not been mentioned.

As the exemplary embodiments may be implemented in several forms without departing from the characteristics thereof, it should also be understood that the above-described embodiments are not limited by any of the details of the foregoing description, unless otherwise specified, but rather should be construed broadly within its scope as defined in the appended claims. Therefore, various changes and modifications that fall within the scope of the claims, or equivalents of such scope are therefore intended to be embraced by the appended claims.

## Claims

1. A mobile terminal comprising:
a display module to display a tag and a menu screen image related to the tag at one portion of a background screen image as the tag is dragged, the menu screen image being displayed according to a dragging direction and a dragging distance;
an input unit to detect a touch input with respect to the display module or the tag to determine the dragging direction and the dragging distance; and
a controller to expose or hide the menu screen image according to the dragging direction the dragging distance of the inputted touch.

2. The mobile terminal of claim 1, wherein when the display module is touched, the controller provides a control mechanism to display the tag and to display the menu screen image related to the tag.

3. The mobile terminal of claim 1, wherein if the tag is not displayed on the background screen image, the controller detects whether or not the display module is touched according to a particular pre-set touch, and after a touch is inputted according to the particular pre-set touch, the controller provides a control mechanism to expose a pre-set menu screen image according to the dragging direction and the dragging distance.

4. The mobile terminal of claim 1, wherein the controller detects whether or not the tag is flicked, and exposes or hides the menu screen image in response to a flicking interaction.

5. The mobile terminal of claim 4, wherein the controller determines whether the tag is flicked based on one or more factors including at least one of number of time the tag is touched, touch pressure applied to the tag, touch area, time at which touch is released, the touch speed or the touch direction.

6. The mobile terminal of claim 1, wherein if a rendered screen image is displayed on the background screen image, the controller reduces the size of a region where the executed screen image is displayed as the region of exposed menu screen image increases, and increases the size of the region where the executed screen image is displayed as the region of exposed menu screen image is reduced.

7. A method for displaying a menu of a mobile terminal comprising:
displaying a tag and a menu screen image related to the tag at one portion of a background screen image as the tag is dragged, the menu screen image being displayed according to a dragging direction and a dragging distance;
detecting a touch input with respect to a display module or the tag to determine the dragging direction and the dragging distance; and
exposing or hiding the menu screen image according to the dragging direction and the dragging distance of the inputted touch.

8. The method of claim 7, wherein the tag is displayed in a shape indicating a direction in which the menu screen image appears or in a direction in which the tag is dragged.

9. The method of claim 7, wherein the menu screen image appears or is hidden according to the dragging distance.

10. The method of claim 7, further comprising:
exposing or hiding the menu screen image according to a direction in which the tag is flicked.

11. The method of claim 7, wherein transparency of the menu screen image is adjusted such that the background image is seen when the menu screen image appears.

12. The method of claim 7, wherein the menu screen image comprises a menu list having a plurality of menu items comprising particular shapes of icons or images and arranged in a particular format.

13. The method of claim 7, wherein the menu screen image is shown at or hidden from a particular region of the screen, by setting at least one of a side portion, a corner portion, or a central portion of the display module as a boundary region from which the menu screen image can appear or disappear.

14. The method of claim 7, wherein if an executed screen image is displayed on the background screen image, the size of a region where the executed screen image is displayed is reduced as the region of exposed menu screen image increased, and the size of the region where the executed screen image is displayed is increased as the region of exposed menu screen image is reduced.

15. A user interaction system comprising:
a graphical user interface (GUI) configured to respond to interactive input from a human user,
wherein when a first image is displayed on a display screen of a mobile communication terminal, user interaction with the display screen results in displaying a GUI object on the display screen,
wherein interaction with the GUI object in a first manner causes a second image to be displayed on the display screen in direct association with speed and direction of the human user's interaction with the GUI object so that the second image is gradually exposed or hidden from view as the human user continues to interact with the GUI object, and
wherein interaction with the GUI object in a second manner causes the second image to be exposed or hidden on the display screen approximately as a full image once the human user has completed a predetermined action without having to continuously interact with the GUI object until the full image is exposed or hidden.
